# EUROPEAN PATENT APPLICATION

(11) **EP 4 358 261 A1**
(43) Date of publication of application: **24.04.2024**
(21) Application number: 22889060.4
(22) Date of filing: 10.10.2022
(51) Int. Cl.: H01M 50/30

(54) **DIRECTIONAL EXHAUST DEVICE, BATTERY, AND ENERGY STORAGE PREFABRICATED BIN**

(30) Priority: 02.11.2021 CN 202122662208 U
(71) Applicant: Contemporary Amperex Technology Co., Limited, Ningde, Fujian 352100 (CN)
(72) Inventor: ZHENG, Chenling, Ningde, Fujian 352100 (CN); LIU, Yue, Ningde, Fujian 352100 (CN); WANG, Zengzhong, Ningde, Fujian 352100 (CN)
(74) Representative: Rowlands, Stuart Michael
(86) International application number: PCT/CN2022/124442
(87) International publication number: WO 2023/078034

(57) **Abstract**

The present application relates to a directional exhaust device, a battery, and an energy storage prefabricated bin. The directional exhaust device comprises at least a first exhaust portion and a second exhaust portion, the first exhaust portion being in communication with a case of the battery, and the second exhaust portion being in communication with the first exhaust portion and the outside, so as to discharge gas generated by the battery by means of the first exhaust portion and the second exhaust portion. A large amount of combustible gas generated during thermal runaway of the battery can be directly discharged to the outside through a directional exhaust channel, so that the combustible gas is prevented from entering a battery bin, and deflagration and explosion caused when the concentration of combustible gas in the battery bin is too high are prevented, improving the safety of the energy storage prefabricated bin, and prolonging the service life of the energy storage prefabricated bin.

## Description

This application claims priority to Chinese Patent Application No. 202122662208.8, titled "DIRECTIONAL EXHAUST DEVICE, BATTERY, AND ENERGY STORAGE PREFABRICATED CHAMBER," and filed on November 02, 2021, the entire disclosure of which is incorporated herein by reference.

### FIELD

The present disclosure relates to the field of energy storage device technologies, and more particularly, to a directional exhaust device, a battery, and an energy storage prefabricated chamber.

### BACKGROUND

Building a new power system with new energy as a main energy source is an important measure to achieve carbon dioxide emission reduction and carbon neutrality, and an energy storage prefabricated chamber shoulders a heavy responsibility in the new power system. A battery is a main form of electrochemical energy storage. Meanwhile, the energy storage prefabricated chamber has become a main product form of a battery energy storage power station due to its characteristics such as high integration and convenient mounting.

Due to internal and external factors such as over-charging, over-discharging, overheating, and mechanical collision, a battery placed inside the energy storage prefabricated chamber is prone to breaking of a battery separator and an internal short circuit, thereby resulting in thermal runaway. When the thermal runaway occurs, a large amount of flammable gas would be generated in the battery. The flammable gas is highly susceptible to deflagration and explosion, thereby affecting safety use of the energy storage prefabricated chamber and causing significant damage.

### SUMMARY

The present disclosure provides a directional exhaust device, a battery, and an energy storage prefabricated chamber. The directional exhaust device is capable of improving safety and prolonging service life of the energy storage prefabricated chamber.

Embodiments of the present disclosure provide a directional exhaust device. The directional exhaust device at least includes a first exhaust portion and a second exhaust portion. The first exhaust portion is in communication with a case of a battery. The second exhaust portion is in communication with the first exhaust portion and an ambient environment, and configured to exhaust gas generated by the battery through the first exhaust portion and the second exhaust portion.

In some embodiments of the present disclosure, the first exhaust portion is removably connected to the second exhaust portion. When the first exhaust portion or the second exhaust portion is damaged, it is possible to only replace the damaged part instead of replacing the entire directional exhaust device, thereby reducing maintenance costs. Moreover, the first exhaust portion and the second exhaust portion can be transported separately during transportation, thereby reducing logistics costs.

In some embodiments of the present disclosure, the second exhaust portion has a first mounting hole. The second exhaust portion is sleeved at an outer side of the first exhaust portion through the first mounting hole. The first mounting hole can allow the first exhaust portion to be directly sleeved at the second exhaust portion, thereby facilitating mounting of the first exhaust portion and the second exhaust portion.

In some embodiments of the present disclosure, the first exhaust portion is sealed against the second exhaust portion by a first seal. The first seal can seal a part where the first exhaust portion is connected to the second exhaust portion to prevent deflagration and explosion of a battery compartment caused by leakage of flammable gas flowing from the first exhaust portion and the second exhaust portion to the ambient environment into the battery compartment. Thus, reliability and safety of the directional exhaust device are improved.

In some embodiments of the present disclosure, the first exhaust portion and the second exhaust portion are of an integrated structure. In this way, a mounting process of the directional exhaust device is simplified. At the same time, the integrated structure has no need to seal a region where the first exhaust portion is connected to the second exhaust portion, which simplifies a structure of the directional exhaust device.

In some embodiments of the present disclosure, the first exhaust portion is bendable relative to the second exhaust portion. A relative bending degree and angle of the first exhaust portion and the second exhaust portion of the directional exhaust device can be adjusted based on different mounting environments. Therefore, the directional exhaust device can be applied to a variety of different environments.

In some embodiments of the present disclosure, the first exhaust portion is configured for an insertion to the case of the battery. The first exhaust portion and a side surface of the case for mounting are often invisible during mounting of the case and the directional exhaust device of the battery. However, such an insertion can allow an operator to insert the first exhaust portion onto the case of the battery by simply moving a position of the case of the battery. Therefore, quick and blind insertion are realized during the mounting of the directional exhaust device to allow for quicker mounting of the directional exhaust device.

In some embodiments of the present disclosure, the first exhaust portion is sealed against the case of the battery by a second seal. The second seal can seal the part where the first exhaust portion is connected to the case of the battery to prevent the deflagration and the explosion of the battery compartment caused by the leakage of the flammable gas flowing from the first exhaust portion and second exhaust portion to the ambient environment into the battery compartment. Thus, the reliability and the safety of the directional exhaust device are improved.

Embodiments of the present disclosure provide a battery. The battery includes a battery cell, a case, and the directional exhaust device as described above. The battery cell is accommodated in the case. The case is configured to provide accommodation space for the battery cell and may be of various structures. The directional exhaust device of the battery is configured to exhaust a flammable gas generated by the battery into the ambient environment under a thermal runaway condition, thereby avoiding the deflagration and the explosion caused by the flammable gas entering the battery compartment.

In some embodiments of the present disclosure, the battery cell is connected to a pressure relief device, and the case has a cavity in communication with the pressure relief device. The case has a second mounting hole, and the first exhaust portion is connected to the case through the second mounting hole to bring the first exhaust portion into communication with the pressure relief device. In this way, the first exhaust portion can be easily inserted to the case through the second mounting hole. That is, the directional exhaust device and the case of the battery may be mounted together by only moving the case of the battery. Therefore, the quick insertion can be realized during the mounting of the directional exhaust device. In this way, the first exhaust portion is brought into communication with the pressure relief device. The flammable gas generated by the battery cell under the thermal runaway condition may be exhausted into the cavity of the case in communication with the pressure relief device through the pressure relief device. In addition, the cavity is a closed cavity and only in communication with the pressure relief device and the directional exhaust device. Therefore, the flammable gas can be exhausted into the ambient environment through the directional exhaust device. Thus, it is possible to prevent the flammable gas from entering the battery compartment, which may cause the deflagration and the explosion.

Embodiments of the present disclosure further provide an energy storage prefabricated chamber. The energy storage prefabricated chamber includes a battery compartment and the battery described above. The battery compartment is configured for placement of the battery to realize an energy storage function of the energy storage prefabricated chamber.

In some embodiments of the present disclosure, the energy storage prefabricated chamber is provided with a partition plate configured to divide the energy storage prefabricated chamber into a plurality of compartments. A cavity of the partition plate is in communication with the ambient environment, and the partition plate is the second exhaust portion. The energy storage prefabricated chamber can be divided into the plurality of compartments by the partition plate, and one of the plurality of compartments for placement of the battery is the battery compartment. In addition, an electrical element compartment, a water cooling unit compartment, etc., are also provided. Therefore, the compartments cooperate with each other to realize normal operation of the energy storage prefabricated chamber. The partition plate may serve as the second exhaust portion. The cavity of the partition plate may be in communication with the ambient environment through the second exhaust portion. Therefore, the flammable gas generated by the battery under the thermal runaway condition can be exhausted into the ambient environment through the second exhaust portion. When the partition plate serves as the second exhaust portion, the partition plate can not only separate the compartments but also to exhaust the flammable gas generated by the battery under the thermal runaway condition. That is, the partition plate has a plurality of functions, and thus an additional second exhaust portion is not required provided in the energy storage prefabricated chamber. As a result, the structure of the energy storage prefabricated chamber can be simplified, and production cost of the energy storage prefabricated chamber can be lowered.

It should be understood that the general description above and the detailed description below are illustrative only and are not intended to limit the present disclosure.

### Beneficial Effects

A large amount of flammable gas generated during the thermal runaway of the battery can be directly exhausted into the ambient environment through the directional exhaust channel, which can prevent the flammable gas from entering the battery compartment, thereby avoiding the deflagration and the explosion caused by an excessively high concentration of the flammable gas in the battery compartment. Therefore, the safety and the service life of the energy storage prefabricated chamber can be improved.

### BRIEF DESCRIPTION OF THE DRAWINGS

FIG.1 is an exploded view of a battery according to an exemplary embodiment of the present disclosure.
FIG. 2 is a schematic partial structural view of a directional exhaust device and a battery according to an exemplary embodiment of the present disclosure.
FIG. 3 is a schematic partial structural of a directional exhaust device and a battery according to another exemplary embodiment of the present disclosure.

### Reference numerals:

100-battery;
10-case;
11-first part ;
12-second part;
13-cavity;
14-second mounting hole;
20-battery cell
200-first exhaust portion;
201-second seal;
300-second exhaust portion;
301-first mounting hole ;
302-first seal.

The accompanying drawings herein are incorporated into the present specification and constitute an integral part of the present specification, illustrate the embodiments consistent with the present disclosure, and serve to explain the principles of the present disclosure together with the description.

### DETAILED DESCRIPTION

Embodiments of technical solutions of the present disclosure will be described in detail below with reference to the accompanying drawings. The following embodiments are only used to more clearly illustrate the technical solutions of the present disclosure, and therefore are only used as examples, and cannot be used to limit the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing exemplary embodiments, and are not intended to limit the present disclosure. Terms "including" and "having" and any variants thereof as used in the description of the embodiments of the present disclosure, the appended claims, and the above accompanying drawings are intended to cover non-exclusive inclusions.

In the description of the present disclosure, terms such as "first" and "second" are used herein for purposes of description and are not intended to indicate or imply relative importance, or to implicitly show the number of technical features, specific orders, or primary and secondary relationships indicated. In the description of the present disclosure, "a plurality of" means two or more, unless specified otherwise.

Reference herein to "an embodiment" means that a particular feature, structure or characteristic described in conjunction with the embodiment can be included in at least one embodiment of the present disclosure. Appearances of this phrase in various places in the specification are not necessarily all referring to the same embodiment, nor are separate or alternative embodiment mutually exclusive of other embodiments. Those skilled in the art understand, both explicitly and implicitly, that the embodiments described herein may be combined with other embodiments.

In the description of the present disclosure, "and/or" describes an association relationship between correlated objects, including three relationships. For example, "A and/or B" can mean A only, B only, or both A and B. in addition, the symbol "/" generally indicates an "or" relationship between the correlated objects preceding and succeeding the symbol.

In the description of the present disclosure, the term "a plurality of" refers to more than two (including two). Similarly, "a plurality of groups" refers to more than two groups (including two groups), and "a plurality of pieces" refers to more than two pieces (including two pieces).

In the description of the present disclosure, it is to be understood that, terms such as "center," "longitudinal," "lateral," "length," "width," "thickness," "over," "below," "front," "back," "left," "right," "vertical," "horizontal," "top," "bottom," "in," "out," "clockwise," "counterclockwise," "axial," "radial," "circumferential," etc., is based on the orientation or position relationship shown in the accompany drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure.

In the description of the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

Building a new power system with new energy as a main body is an important measure to achieve carbon dioxide emission reduction and carbon neutrality, and an energy storage prefabricated chamber shoulders a heavy responsibility in the new power system. At present, a scale of new energy storage device in China has soared, and a battery has become a main form of electrochemical energy storage. Meanwhile, an energy storage prefabricated chamber has become a main product form of a battery energy storage power station due to its high integration and convenient mounting.

It is found that under the action of internal and external factors such as over-charging, over-discharging, overheating, and mechanical collision, the battery is prone to breaking of a battery separator and an internal short circuit, thereby resulting in thermal runaway. When the thermal runaway occurs, a large amount of flammable gas is generated in the battery. The flammable gas is likely to cause deflagration and explosion after being directly exhausted into the battery compartment. Currently, traditional fire prevention measures cannot effectively suppress the thermal runaway of the battery, which causes an initial fire to rapidly spread and escalate into a large-scale fire with great danger and significant damage.

In order to alleviate the fire problem caused by the thermal runaway of the battery, it is found that by discharging the flammable gas generated by the battery into the ambient environment, it is possible to prevent deflagration and explosion caused by the flammable gas from remaining and being accumulated in the battery. The present disclosure can exhaust the flammable gas generated by the battery in the energy storage prefabricated chamber through the directional exhaust device.

The directional exhaust device disclosed in embodiments of the present disclosure may be, but is not limited to, configured for directional exhaust of the flammable gas generated by the battery in the energy storage prefabricated chamber, and may also be configured for directional exhaust of gas in other scenarios. The energy storage prefabricated chamber includes a battery compartment and a battery. The battery compartment is configured for placement of the battery to realize an energy storage function of the energy storage prefabricated chamber.

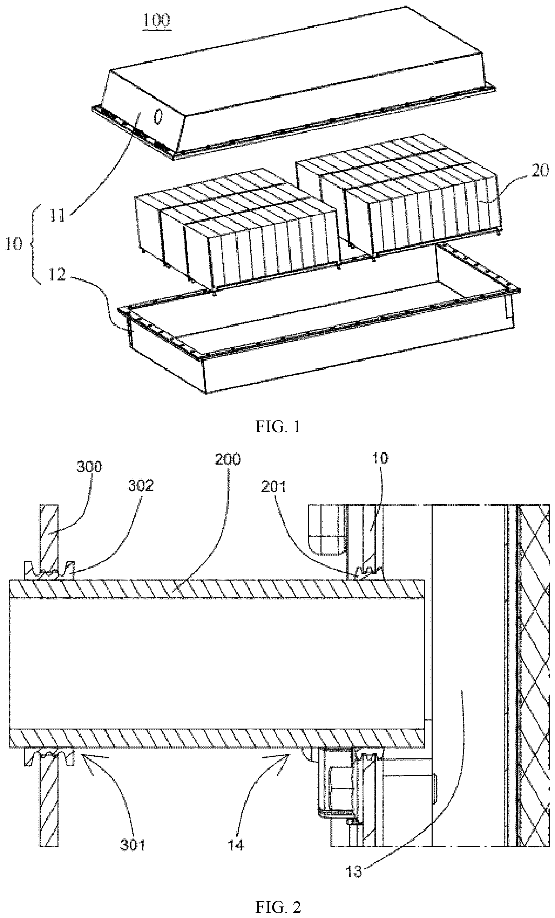

FIG. 1 is an exploded view of a battery according to an exemplary embodiment of the present disclosure. Embodiments of the present disclosure provide a battery 100. The battery 100 includes a battery cell 20, a case 10, and a directional exhaust device.

In this embodiment, the battery cell 20 is accommodated in the case 10. The case10 is configured to provide an accommodation space for the battery cell 20. The case10 may be of various structures. In some embodiments, the case10 may include a first portion 11 and a second portion 12. The first portion 11 and the second portion 12 cover together. The accommodation space for accommodating the battery cell 20 is defined by the first portion 11 and the second portion 12 together. The second portion 12 may have a hollow structure with an open side, and the first portion 11 may have a plate-like structure. The first portion 11 covers the open side of the second portion 12 to allow the first portion 11 and the second portion 12 together to define the accommodation space. Each of the first portion 11 and the second portion 12 may have a hollow structure with an open side, and the open side of the first portion 11 may cover the open side of the second portion 12. In some embodiments, the case 10 formed by the first portion 11 and the second portion 12 may be in various shapes, such as a cylinder, a cuboid.

The battery 100 may include a plurality of battery cells 20. The plurality of battery cells 20 may be connected to each other in series or in parallel or in a combination thereof. The parallel-series connection refers to the plurality of battery cells 20 is connected to each other both in series and in parallel. The plurality of battery cells 20 may be directly connected to each other in series or in parallel or in a combination thereof, and then the plurality of battery cells 20 may be entirely accommodated in the case10. In an exemplary embodiment, the battery 100 may also be in a battery module 100 form formed by connecting the plurality of battery cells 20 in series or in parallel or in a combination thereof. Then, a plurality of battery modules 100 is connected in series or in parallel or in a combination thereof to form a whole and is accommodated in the case10. The battery 100 may also include other structures. For example, the battery 100 may further include a current collecting component configured to allow for an electrical connection between the battery cells 20.

Each battery cell 20 may be a secondary battery or a primary battery, and may also be a lithium sulfur battery, a sodium ion battery or a magnesium ion battery, and the present disclosure is not limited thereto. The battery cells 20 may be formed into a cylindrical shape, a flat shape, a rectangular shape, or other shapes.

In addition, the directional exhaust device of the battery 100 can exhaust the flammable gas generated by the battery 100 under the thermal runaway condition into the ambient environment, thereby avoiding the deflagration and the explosion caused by the flammable gas entering the battery compartment.

FIG. 2 is a schematic diagram of a partial structure of a directional exhaust device and a battery 100 according to an exemplary embodiment of the present disclosure. The directional exhaust device includes at least a first exhaust portion 200 and a second exhaust portion 300. The first exhaust portion 200 is in communication with a case 10 of the battery 100. The second exhaust portion 300 is in communication with the first exhaust portion 200 and an ambient environment to exhaust gas generated by the battery 100 through the first exhaust portion200 and the second exhaust portion 300.

As illustrated in FIG. 2, the first exhaust portion 200 and the second exhaust portion 300 are formed into a directional exhaust channel configured to bring the ambient environment into communication with the case 10, and gas can flow in the directional exhaust channel. A large amount of flammable gas generated by the battery 100 under the thermal runaway condition can be directly exhausted into the ambient environment through the directional exhaust channel, which prevents the flammable gas from entering the battery compartment, thereby avoiding the deflagration and the explosion caused by an excessively high concentration of the flammable gas in the battery compartment. Therefore, safety and service life of the energy storage prefabricated chamber are improved.

In addition, a safety compartment may be provided between the first exhaust portion 200 and the ambient environment to temporarily contain the flammable gas, and a fan or other devices configured to accelerate flow of the gas may be disposed in the safety compartment to accelerate exhaust of the flammable gas, thereby rapidly exhausting flammable gas into the ambient environment.

In an embodiment, as illustrated in FIG. 2, the first exhaust portion 200 is removably connected to the second exhaust portion 300.

In this embodiment, the removable connection between the first exhaust portion 200 and the second exhaust portion 300 enables only replacement of the damaged part when the first exhaust portion 200 or the second exhaust portion 300 is damage, without replacing the entire directional exhaust device. Therefore, it is possible to lower maintenance costs. Meanwhile, the removable connection between the first exhaust portion 200 and the second exhaust portion 300 enables the first exhaust portion 200 and the second exhaust portion 300 to be transported separately during transportation, thereby reducing logistics costs.

In an exemplary embodiment, as illustrated in FIG. 2, the second exhaust portion 300 has a first mounting hole 301, and the second exhaust portion 300 is sleeved at an outer side of the first exhaust portion 200 through the first mounting hole 301.

In this embodiment, the first mounting hole 301 is a through hole at the second exhaust portion 300. The first through hole 301 can allow the first exhaust portion 200 to be directly sleeved at the second exhaust portion 300, thereby facilitating mounting of the first exhaust portion 200 and the second exhaust portion 300.

In some embodiments, as illustrated in FIG. 2, the first exhaust portion 200 is sealed against the second exhaust portion 300 by a first seal 302.

In this embodiment, the first seal 302 may be a gasket, an adhesive, etc. The first seal 302 can seal a part where the first exhaust portion 200 is connected to the second exhaust portion 300 to avoid the deflagration and the explosion of the battery compartment caused by leakage of the flammable gas flowing from the first exhaust portion and the second exhaust portion to the ambient environment into the battery compartment. Thus, reliability and safety of the directional exhaust device are improved.

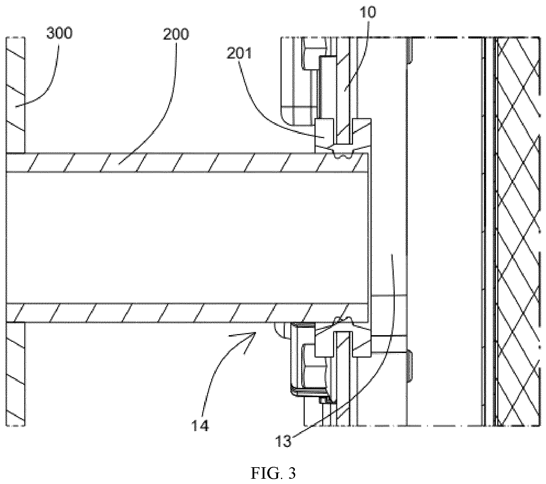

FIG. 3 is a schematic structural view of a directional exhaust device and a battery 100 according to another exemplary embodiment of the present disclosure. As illustrated in FIG. 3, the first exhaust portion 200 and the second exhaust portion 300 are of an integrated structure.

In this embodiment, the first exhaust portion 200 and the second exhaust portion 300 are of the integrated structure, and thus mounting between the first exhaust portion 200 and the second exhaust portion 300 are not required, thereby simplifying a mounting process of the directional exhaust device. Meanwhile, the first exhaust portion 200 and the second exhaust portion 300 are of the integrated structure without sealing the region where the first exhaust portion 200 is connected to the second exhaust portion 300, which simplifies a structure of the directional exhaust device.

In an exemplary embodiment, as illustrated in FIG. 2 and FIG. 3, the first exhaust portion 200 is bendable relative to the second exhaust portion 300.

In this embodiment, a relative bending degree and angle of the first exhaust portion 200 relative to the second exhaust portion 300 of the directional exhaust device can be adjusted based on different mounting environments. Therefore, the directional exhaust device can be applied to a variety of different environments.

In an exemplary embodiment, as illustrated in FIG. 2 and FIG. 3, the first exhaust portion 200 is configured for an insertion to the case 10 of the battery 100.

In this embodiment, the first exhaust portion 200 and a side surface of the case 10 for mounting are often invisible during the mounting of the case10 and the directional exhaust device of the battery 100. However, such an insertion can allow the operator to insert the first exhaust portion 200 onto the case by simply moving a position of the case. Therefore, quick and blind insertion are realized during the mounting of the directional exhaust device, thereby allowing for quicker mounting of the directional exhaust device.

In some embodiments, as illustrated in FIG. 2 and FIG. 3, the first exhaust portion 200 is sealed against the case 10 of the battery 100 by a second seal 201.

In this embodiment, the first seal 302 may be a gasket, an adhesive, etc. The second seal 201 can seal a part where the first exhaust portion 200 is connected to the second exhaust portion 300 to avoid the deflagration and the explosion of the battery compartment caused by leakage of the flammable gas flowing from the first exhaust portion 200 and the second exhaust portion 300 to the ambient environment into the battery compartment. Thus, reliability and safety of the directional exhaust device are improved.

In an exemplary embodiment, as illustrated in FIG. 2 and FIG. 3, the battery cell 20 is connected to a pressure relief device, and the case10 has a cavity 13 in communication with the pressure relief device. The case 10 has a second mounting hole 14, and the first exhaust portion 200 is connected to case 10 through the second mounting hole 14 to bring the first exhaust portion 200 into communication with the pressure relief device.

The pressure relief device may be an explosion-proof valve, which is a pressure relief mechanism configured to release an internal pressure of the battery 100 when the internal pressure or an internal temperature of the battery 100 reaches a threshold. For example, during a normal operation of the battery 100, a gas pressure inside the battery 100 is smaller than an opening pressure of the explosion-proof valve. In this case, the explosion-proof valve is in a closed state, and the gas inside the battery 100 is in no communication with gas outside the battery 100. When the thermal runaway occurs in the battery 100 under the internal and external factors such as over-charging, over-discharging, overheating, mechanical collision, etc., a large amount of flammable gas is generated inside the battery 100 to cause the gas pressure inside the battery 100 to be greater than the opening pressure of the explosion-proof valve. In this case, the explosion-proof valve is changed from the closed state into an open state, enabling the flammable gas inside the battery 100 to be exhausted through the explosion-proof valve. Therefore, the deflagration and the explosion caused by the large amount of flammable gas accumulated inside the battery 100 can be avoided.

In this embodiment, the second mounting hole 14 is a through hole at the case 10. The first exhaust portion 200 can be easily inserted to the case10 through the second mounting hole 14. That is, the directional exhaust device and the case 10 of the battery 100 can be mounted together only by moving the case 10 of the battery 100. Therefore, the quick insertion during the mounting of the directional exhaust device can be realized. In this case, the first exhaust portion 200 is brought into communicate with the pressure relief device. The first exhaust portion 200 may also be provided with a connection structure for engaging with the second mounting hole 14 of the case 10. For example, the first exhaust portion 200 may have a snap groove engaging with the second mounting hole 14 of the case 10.

The flammable gas generated by the battery cell 20 under the thermal runaway condition may be exhausted into the cavity 13 of the case 10 in communication with the pressure relief device through the pressure relief device. The cavity 13 is a closed cavity 13 and is only in communication with the pressure relief device and the directional exhaust device. Therefore, the flammable gas can be exhausted into the ambient environment through the directional exhaust device. Thus, it is possible to prevent the flammable gas from entering the battery compartment, which would causing the deflagration and the explosion.

In an exemplary embodiment, the energy storage prefabricated chamber is provided with a partition plate dividing the energy storage prefabricated chamber into a plurality of compartment. A cavity 13 of the partition plate is in communication with the ambient environment, and the partition plate is the second exhaust portion 300.

In this embodiment, the energy storage prefabricated chamber can be divided into the plurality of compartments by the partition plate, and one of the plurality of compartments for placement of the battery is the battery compartment. In addition, an electrical element compartment, a water cooling unit compartment, etc., are also arranged. Therefore, the compartments cooperate with each other to realize the normal operation of the energy storage prefabricated chamber.

In this embodiment, the partition plate may serve as the second exhaust portion 300. The cavity 13 of the partition plate may be in communication with the ambient environment. Therefore, the flammable gas generated by the battery under the thermal runaway condition can be exhausted into the ambient environment through the second exhaust portion 300. When the partition plate serves as the second exhaust portion 300, the partition plate can not only separate the compartments, but also exhaust the flammable gas generated by the battery 100 under the thermal runaway condition. That is, the partition plate has a plurality of functions, and thus an additional second exhaust portion 300 is not required to be provided in the energy storage prefabricated chamber. As a result, the structure of the energy storage prefabricated chamber can be simplified, and production cost of the energy storage prefabricated chamber can be lowered.

In addition, a second exhaust portion 300 in communication with the ambient environment may be additionally provided in the energy storage prefabricated chamber, and the second exhaust portion 300 is in communication with the first exhaust portion 200. In this case, the second exhaust portion 300 may or may not be connected to the partition plate, and the second exhaust portion 300 and the partition plate are relatively independent in function and structure.

According to the embodiments of the present disclosure, as illustrated in FIG. 1 and FIG. 2, embodiments of the present disclosure provide a directional exhaust device. The directional exhaust device includes a first exhaust portion 200 and a second exhaust portion 300. The first exhaust portion 200 may be a partition plate. The first exhaust portion 200 is in communication with the second exhaust portion 300. Another end of the first exhaust portion 200 is configured to be in communication with the ambient environment. Another end of the second exhaust portion 300 is connected to the case of the battery. When the thermal runaway occurs in the battery 100, the pressure relief device can exhaust the flammable gas generated by the battery cell to the cavity 13 between the second exhaust portion 300 and the pressure relief device, and the flammable gas in the cavity 13 can be exhausted into the ambient environment through the first exhaust portion 200 and the second exhaust portion 300. Therefore, the deflagration and the explosion caused by the flammable gas entering the battery compartment and the significant damage can be avoided.

While the embodiments of the present disclosure have been described above, they are not intended to limit the present disclosure. For those skilled in the art, various changes and variations can be made to the present disclosure. Any modifications, equivalent substitutions, and improvements made within the spirit and principle of the present disclosure are to be encompassed by the scope of the claims of the present disclosure.

## Claims

1. A directional exhaust device, at least comprising:
a first exhaust portion (200) in communication with a case (10) of a battery (100); and
a second exhaust portion (300) in communication with the first exhaust portion (200) and an ambient environment and configured to exhaust gas generated by the battery (100) through the first exhaust portion (200) and the second exhaust portion (300).

2. The directional exhaust device according to claim 1, wherein the first exhaust portion (200) is removably connected to the second exhaust portion (300).

3. The directional exhaust device according to claim 2, wherein the second exhaust portion (300) has a first mounting hole (301), the second exhaust portion (300) being sleeved at an outer side of the first exhaust portion (200) through the first mounting hole (301).

4. The directional exhaust device according to claim 3, wherein the first exhaust portion (200) is sealed against the second exhaust portion (300) by a first seal (302).

5. The directional exhaust device according to claim 1, wherein the first exhaust portion (200) and the second exhaust portion (300) are of an integrated structure.

6. The directional exhaust device according to any one of claims 1 to 5, wherein the first exhaust portion (200) is bendable relative to the second exhaust portion (300).

7. The directional exhaust device according to any one of claims 1 to 5, wherein the first exhaust portion (200) is configured for an insertion to the case (10) of the battery (100).

8. The directional exhaust device according to claim 7, wherein the first exhaust portion (200) is sealed against the case (10) of the battery (100) by a second seal (201).

9. The directional exhaust device according to any one of claims 1 to 5, wherein a safety compartment is provided between the first exhaust portion and the ambient environment to temporarily contain the gas.

10. The directional exhaust device according to claim 9, wherein a fan is disposed in the safety compartment to accelerate exhaust of the gas.

11. A battery (100), comprising:
a battery cell (20);
a case (10); and
the directional exhaust device according to any one of claims 1 to 10.

12. The battery according to claim 11, wherein:
the battery cell (20) is connected to a pressure relief device, and the case (10) has a cavity (13) in communication with the pressure relief device; and
the case (10) has a second mounting hole (14), the first exhaust portion (200) being connected to the case (10) through the second mounting hole (14) to bring the first exhaust portion (200) into communication with the pressure relief device.

13. The battery according to claim 12, wherein the second mounting hole is a through hole at the case.

14. The battery according to claim 12, wherein the first exhaust portion has a snap groove cooperating with the second mounting hole of the case.

15. An energy storage prefabricated chamber, comprising:
a battery compartment; and
the battery (100) according to any one of claims 11 to 14.

16. The energy storage prefabricated chamber according to claim 15, wherein the energy storage prefabricated chamber is provided with a partition plate configured to divide the energy storage prefabricated chamber into a plurality of compartments, a cavity (13) of the partition plate being in communication with the ambient environment, and the partition plate being the second exhaust portion (300).
